# EUROPÄISCHE PATENTSCHRIFT

(11) **EP 2 860 127 B1**
(45) Veröffentlichungstag und Bekanntmachung des Hinweises auf die Patenterteilung: **29.06.2016**
(21) Anmeldenummer: 13188292.0
(22) Anmeldetag: 11.10.2013
(51) Int. Cl.: B65D 19/44, B23Q 7/14, F16B 21/02

(54) **Vorrichtung zum Halten von Gegenständen und zugehöriger Verbindungskörper**
Device for holding objects and corresponding connecting device
Dispositif de support d'objets et corps de liaison correspondant

(43) Veröffentlichungstag der Anmeldung: 15.04.2015
(73) Patentinhaber: ALWA GmbH & Co. KG Konstruktion & Formenbau, 78652 Deißlingen (DE)
(72) Erfinder: Wasmeier, Albert, 88677 Markdorf (DE)
(74) Vertreter: Engelhardt & Engelhardt

(56) Entgegenhaltungen:
- DE-U- 7 110 537
- DE-U1- 8 908 551
- DE-U1-202012 103 711
- GB-A- 2 399 108

## Beschreibung

Die Erfindung bezieht sich auf eine Vorrichtung zur Aufnahme und zum Halten von Gegenständen, beispielsweise von Werkstücken oder Werkzeugen, nach dem Ober-begriff des Patentanspruches 1 und auf einem Verbindungkörper als Bestandteil der Vorrichtung und zur Anwendung bei der Vorrichtung.

Solche Vorrichtungen bestehen üblicherweise aus einem Lochblech, das als Traggestell verwendet ist, und sind beispielsweise aus der EP2570234 A1 bekannt. Die an dem Traggestell zu arretierenden Aufnahmekäfige oder Verbindungskörper weisen einen Haltesockel auf, an dem zwei radial abstehende Rastnasen angeformt sind, die in entsprechend angepasste Aufnahmeöffnungen in dem Lochblech einsteckbar sind und durch Verdrehen nach Art eines Bajonettverschlusses an dem Lochblech fixiert sind.

Aus der DE 7110537 U1 ist eine Palette bekannt geworden, die aus einem Rahmen und einem in diesem Rahmen angeordneten Maschendraht gebildet ist. In den Maschendraht sind Steckhülsen für die Aufnahme von Domen einsetzbar.

Eine Trägerplatte für ein Werkstückträgersystem wird durch die DE 202012103711 U1 offenbart. In die Trägerplatte ist eine Vielzahl von Durchbrüchen eingebracht, in die mittels einer Befestigungsstruktur Werkstück-Trägerelemente arretierbar einsetzbar sind.

Eine weitere Aufbewahrungsvorrichtung für Werkstücke ist der DE 8908551 U1 zu entnehmen. Eine Werkstückunterlage ist gitterartig ausgebildet, wodurch ein Hindurchtreten von an den Werkstücken eventuell angeformten Fortsätzen möglich ist.

Die in den Aufnahmekäfigen oder Verbindungskörpern eingesteckten Werkstücke sollen zu Transport-, Lager- oder Bearbeitungszwecken zuverlässig und beschädigungsfrei in diesen gehalten sein.

Da die Traggestelle und die daran befestigten Verbindungskörper gemeinsam mit den Werkstücken einem Bearbeitungsprozess zugeführt sind, bei dem oftmals Reinigungs- oder Beschichtungsmedien eingesetzt werden, hat sich nachteiliger Weise bei dem vorgenannten Stand der Technik herausgestellt, dass solche Flüssigkeiten durch das Lochblech nicht ausreichend schnell abfließen können, da die Öffnungen des Lochblechs durch die eingesteckten Verbindungskörper verschlossen sind.

Daher haben sich Traggestelle, die aus einer Vielzahl von parallel und beabstandet zueinander verlaufenden Drahtsträngen gebildet sind, als geeignet erwiesen solche technischen Anforderungen zu erfüllen. Die von den Drahtsträngen eingeschlossenen Räume bilden eine rechteckförmige Aufnahmeöffnung, in die die Verbindungskörper einsteckbar sein sollen. Die jeweils parallel verlaufenden Drahtstränge sind dabei in zwei unterschiedlichen Ebenen angeordnet, um eine einfache und kostengünstige Herstellung des Traggestells zu erreichen. Die sich überkreuzenden Drahtstränge sind in den Knotenpunkten fest miteinander verbunden, so dass das Traggestell eine Gitterstruktur mit einer hohen Eigenstabilität aufweist.

Bei solchen Traggestellen hat sich das Problem herausgestellt, dass die Verbindungskörper nicht zuverlässig und drehfest an dem Traggestell befestigbar sind, da die in unterschiedlichen Ebenen verlaufenden Drahtstränge und der jeweilige Verbindungskörper fest miteinander zu fixieren sind, und zwar derart, dass der Verbindungskörper sowohl drehfest als auch in zwei senkrecht zueinander stehenden Richtungen an dem Traggestell festgesetzt ist, um ein Verdrehen bzw. Herausfallen der Verbindungskörper aus dem Traggestell zu verhindern.

Es ist daher Aufgabe der Erfindung, eine Vorrichtung der eingangs genannten Gattung sowie einen Verbindungskörper als Befestigungsmittel in einem Traggestell bereit zu stellen, durch die eine zuverlässige, dauerhafte, jedoch lösbare Verbindung zwischen dem Verbindungskörper und dem Traggestell vorliegt, deren Befestigung ausschließlich mittels eines vorgegebenen Drehmomentes geschaffen bzw. gelöst werden kann.

Diese Aufgabe ist erfindungsgemäß durch die Merkmale der kennzeichnenden Teile von Patentanspruch 1 bzw. 2 gelöst.

Weitere vorteilhafte Weiterbildungen der Erfindung ergeben sich aus den Unteransprüchen.

Der besondere Vorteil der Erfindung liegt darin begründet, dass an dem Verbindungskörper Befestigungsmittel angeformt oder angearbeitet sind, die jeweils einem bestimmten Höhenniveau des Traggestells bzw. den das Traggestell bildenden Drahtsträngen zugeordnet sind und die unterschiedliche Funktionen erfüllen. Der unmittelbar an dem Verbindungskörper angeformte Zylinder, der einen Durchmesser aufweist, der der längeren Kante der Aufnahmeöffnung entspricht, dient dazu, den Verbindungskörper zum einen in der Aufnahmeöffnung des Traggestells verdrehen zu können und zum anderen, dass durch den Zylinder eine Anlagefläche zwischen den beiden parallel verlaufenden Drahtsträngen der oberen Ebene gebildet ist, so dass der Verbindungskörper in der oberen Ebene des Traggestelles durch den Zylinder festgesetzt ist.

Das benachbart zu dem Zylinder angeformte Klemmelement soll die Verdrehsicherheit des Verbindungskörpers in dem Traggestell gewährleisten. Um dies zu erreichen, weist das Klemmelement mindestens eine Anlagefläche auf, die parallel zu den Drahtsträngen der unteren Ebene im montierten Zustand des Verbindungskörpers verläuft und mit diesen beim Eindrehen des Verbindungskörpers zusammenwirkt. Durch das Verdrehen des Verbindungskörpers wird nämlich erreicht, dass die Anlagefläche zwischen den kürzeren Kanten der unteren Ebene der Drahtstränge zusammengedrückt wird und beim Weiterverdrehen in ihre Endlage zurück schnappt, wodurch eine Verrastung des Verbindungskörpers in der unteren Ebene der Drahtstränge geschaffen ist. Folglich kann der Verbindungskörper im derart arretierten Zustand ohne ein gewisses Drehmoment weder gelöst noch in die Aufnahmeöffnung eingedreht werden.

Dieser Schnappmechanismus wird dadurch erreicht, dass die Anlagefläche des Klemmelementes eine Länge aufweist, die größer bemessen ist, als die halbe Länge der kürzeren Kante der Aufnahmeöffnung, so dass zwei diametral gegenüberliegende Rastnasen entstehen, die beim Verdrehen des Verbindungskörpers durch die Kanten der Aufnahmeöffnung geringfügig zusammengedrückt werden und beim Weiterdrehen in ihre Ausgangsstellung zurückschnappen. Je länger die Anlagefläche bemessen ist, desto mehr Drehmoment ist aufzuwenden. Wenn lediglich eine der beiden Anlageflächen über die halbe Länge der kürzeren Kante der Aufnahmeöffnung übersteht, entsteht ebenso eine Vorspannung der Rastnase der Anlagefläche, nämlich dadurch, dass der Verbindungskörper durch den Zylinder, der an der oberen Ebene der Drahtstränge lageorientiert anliegt, gehalten ist, so dass die Rastnase der Anlagefläche des Klemmelementes von dem die Vorspannung ausübenden Drahtstrang nicht wegbewegbar ist.

Die sich an dem Klemmelement unmittelbar anschließende Fixierplatte dient dazu, das Herausfallen des Verbindungskörpers aus der Aufnahmeöffnung des Traggestells zu verhindern. Folglich weist die Fixierplatte eine an die Innenkontur der Aufnahmeöffnung angepasste Außenkontur auf, so dass die Fixierplatte durch die Aufnahmeöffnung bei der Montage gesteckt werden kann. Sobald der Verbindungskörper in der Aufnahmeöffnung um 90° verdreht ist, übergreift die Fixierplatte mit zwei gegenüberliegenden Stirnseiten die Drahtstränge der unteren Ebene, so dass der Verbindungskörper durch die Fixierplatte und die von dem Verbindungskörper radial abstehenden Haltenasen zwischen der oberen und unteren Ebene der Drahtstränge zuverlässig gehalten ist.

Die an dem Verbindungskörper radial abstehenden Haltenasen übergreifen zudem die obere Ebene der Drahtstränge und liegen im montiertem Zustand des Verbindungskörper in dem Traggestell an diesen an, so dass der Verbindungskörper durch die Haltenasen in Richtung der unteren Ebene des Traggestells festgesetzt ist.

Durch die bogen- oder V-förmige Einkerbung in zwei gegenüberliegenden Stirnseiten des Klemmelementes, die im montierten Zustand des Verbindungskörpers der unteren Ebene der Drahtstränge zugewandt sind, entsteht eine Art Trichter, denn die Seitenwände der Einkerbung umgreifen teilweise den jeweiligen Drahtstrang, so dass der Verbindungskörper senkrecht zu der von dem Drahtgestell gebildeten Ebene lageorientiert gehalten ist. Auch durch die V-förmigen oder bogenförmigen Einkerbungen in der Mantelfläche des Zylinders wird eine solche Fixiermöglichkeit zur Verfügung gestellt, wodurch der Verbindungskörper in zweifacher Hinsicht an dem Traggestell arretiert ist.

Die Befestigung des Verbindungskörpers an dem Traggestellt und dessen Herausnahme kann folglich ausschließlich mit Hilfe eines vorgegebenen Drehmomentes und der positionsgenauen Ausrichtung des Verbindungskörpers in Bezug auf die Aufnahmeöffnung des Traggestells erreicht werden.

Beim Verdrehen des Verbindungskörpers werden die Anlageflächen bzw. die Rastnasen zwischen den zwei parallel verlaufenden Drahtsträngen der unteren Ebene zusammengedrückt, da die Lichteweite, also der diagonale Abstand der beiden Anlageflächen zueinander etwas größer bemessen ist, als die Diagonale der beiden parallel verlaufenden Drahtstränge der unteren Ebene, die im Bereich der Rastnasen verläuft.

In der Zeichnung ist ein Ausführungsbeispiel einer Vorrichtung und eines Verbindungskörpers als Bestandteil der Vorrichtung dargestellt, die nachfolgend näher erläutert sind. Im Einzelnen zeigt:
- Figur 1: eine Vorrichtung, bestehend aus einer Vielzahl von parallel und beabstandet zueinander verlaufenden Drahtsträngen, die zwei unterschiedliche Ebenen bilden und gemeinsam eine Vielzahl von rechteckförmigen Aufnahmeöffnungen zur Bildung eines Traggestells einschließen und aus mehreren Verbindungskörpern mit einem daran angeformten Haltesockel, der in eine der Aufnahmeöffnungen einsteckbar ist, in perspektivischer Seitenansicht,
- Figur 2: einen Ausschnitt der Vorrichtung gemäß Figur 1 mit einem eingesetzten Verbindungskörper, in perspektivischer Darstellung von unten und vergrößert,
- Figur 3a: einen der Verbindungskörper gemäß Figur 1 oder 2 in einer ersten Seitenansicht,
- Figur 3b: den Verbindungskörper gemäß Figur 3a in einer um 90° verdrehten zweiten Seitenansicht,
- Figur 4a: den Verbindungskörper gemäß Figur 3a im eingesteckten Zustand in die Vorrichtung,
- Figur 4b: den Verbindungskörper gemäß Figur 4a entlang der Schnittlinie IVb-IVb,
- Figur 4c: den Verbindungskörper gemäß Figur 4a entlang der Schnittlinie IVc-IVc,
- Figur 4d: den Verbindungskörper gemäß Figur 4a entlang der Schnittlinie IVd-IVd,
- Figur 4e: den Verbindungskörper gemäß Figur 4a entlang der Schnittlinie IVe-IVe,
- Figur 5a: den Verbindungskörper und die Vorrichtung gemäß Figur 1, in Draufsicht und im eingesteckten Zustand des Verbindungskörpers in die Aufnahmeöffnung,
- Figur 5b: die Vorrichtung und den Verbindungskörper gemäß Figur 5a um 45° verdreht in der Aufnahmeöffnung,
- Figur 5c: den Verbindungskörper und die Vorrichtung gemäß Figur 5a im 90° verdrehten Zustand, durch den der Verbindungskörper lageorientiert und drehfest an dem Traggestell der Vorrichtung gehalten ist und
- Figuren 6a Bis 6d: die Zuordnung der Drahtstränge zu den Ebenen des Haltesockels der Vorrichtung gemäß Figur 1 im montierten Zustand und in verschiedenen Ansichten.

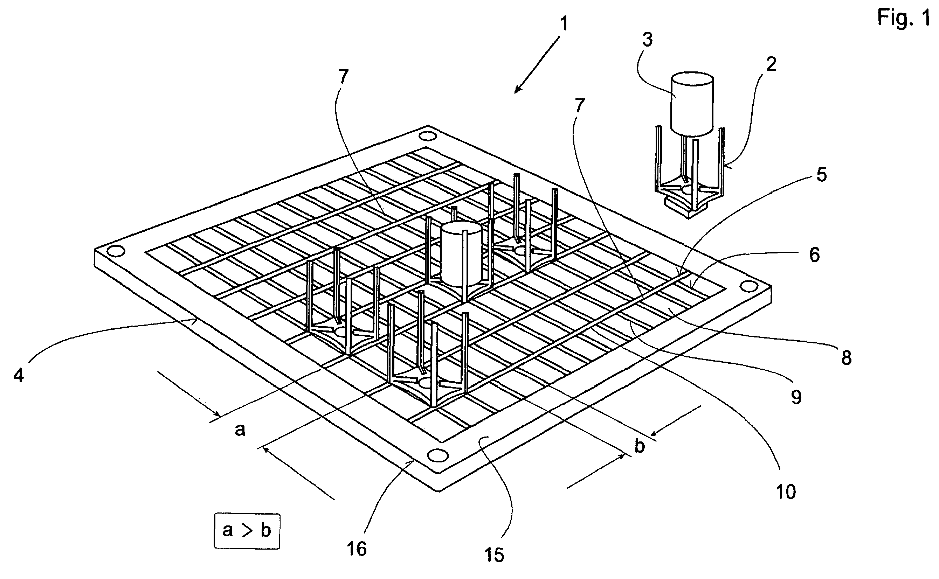

In Figur 1 ist eine Vorrichtung 1 abgebildet, durch die ein Verbindungskörper 2 als Bestandteil der Vorrichtung 1 zur Aufnahme von Gegenständen 3 lageorientiert und drehfest fixiert ist. Die in den Verbindungskörpern 2 eingesteckten Gegenstände 3, beispielsweise Werkstücke oder Werkzeuge, sollen zu Transport-, Lager- und Bearbeitungszwecken beschädigungsfrei durch die Verbindungskörper 2 abgestützt sein.

Die Vorrichtung 1 umfasst ein Kastenprofil 16, das aus vier senkrecht zueinander verlaufenden Stegen 15 gebildet ist, die an ihren jeweiligen freien Enden fest miteinander verbunden sind. Diese Kastenprofile 16 können Transporthilfen oder als Haltemittel für Werkstücke oder Werkzeuge aller Art verwendet werden.

Darüberhinaus sind zwischen den Stegen 15 des Kastenprofils 16 eine Vielzahl von parallel und beabstandet zueinander verlaufenden Drahtsträngen 7 angeordnet, die in zwei unterschiedlichen Ebenen 5, 6 verlaufen und folglich ein mit einer Gitterstruktur versehenes Traggestell 4 bilden. Die parallel und beabstandet zueinander angeordneten Drahtstränge 7 liegen demnach in einer der Ebenen 5 oder 6. Die Drahtstränge 7 in den beiden Ebenen 5 und 6 sind in ihren Kreuzungspunkten fest miteinander verbunden, so dass zwischen den Drahtsträngen 7 der Ebenen 5, 6 eine rechteckförmige Aufnahmeöffnung 8 geschaffen ist, da benachbarte Drahtstränge 7 der oberen Ebene 5 eine längere Kante 9 als in der unteren Ebene 6 angeordnete benachbarte Drahtstränge 7 ausbilden. Die durch benachbarte Drahtstränge 7 der oberen Ebene 5 definierte Kantenlänge der längeren Kanten 9 ist mit der Variablen a und die durch benachbarte Drahtstränge 7 der unteren Ebene 6 definierte Kantenlänge der kürzeren Kanten 10 ist mit der Variablen b als Bezugsgröße in Figur 1 gekennzeichnet.

Die Verbindungskörper 2 weisen jeweils einen angearbeiteten oder angeformten Haltesockel 11 auf, der fluchtend zu der Längsachse 14 des Verbindungskörpers 2 ausgerichtet ist und in eine der Aufnahmeöffnungen 8 des Traggestells 4 einsteckbar ist. Desweiteren sind an dem Verbindungskörper 2 vier Aufnahmeelemente 12 angearbeitet, die als Stege ausgebildet sind und die einen Innenraum einschließen, in den einer der Gegenstände 3 einsteckbar ist. Die Aufnahmeelemente 12 können auch als Haken oder Klippse ausgestaltet sein, um andersartig ausgestaltete Gegenstände, beispielsweise Schraubendreher, Werkzeugschlüssel, Zangen, Hämmer, Wellen, Schrauben, Muttern oder dergleichen, aufzunehmen.

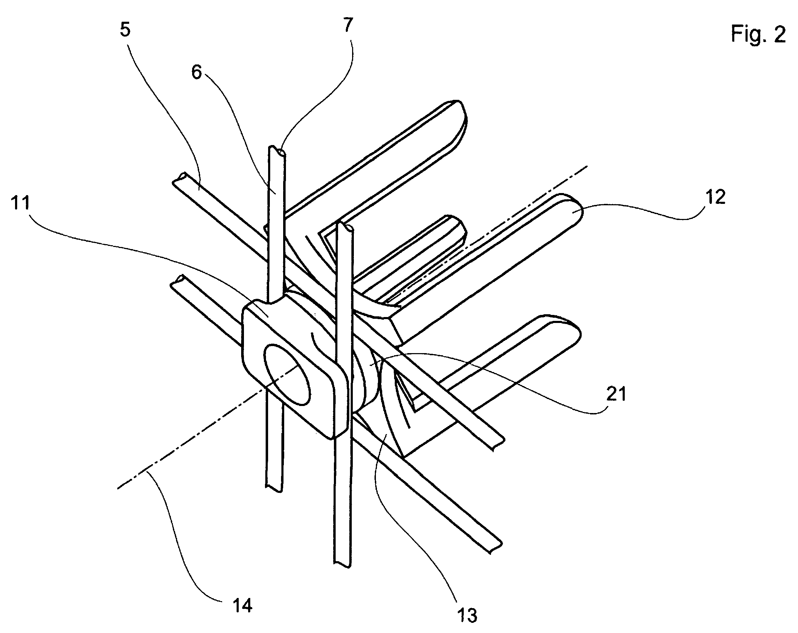

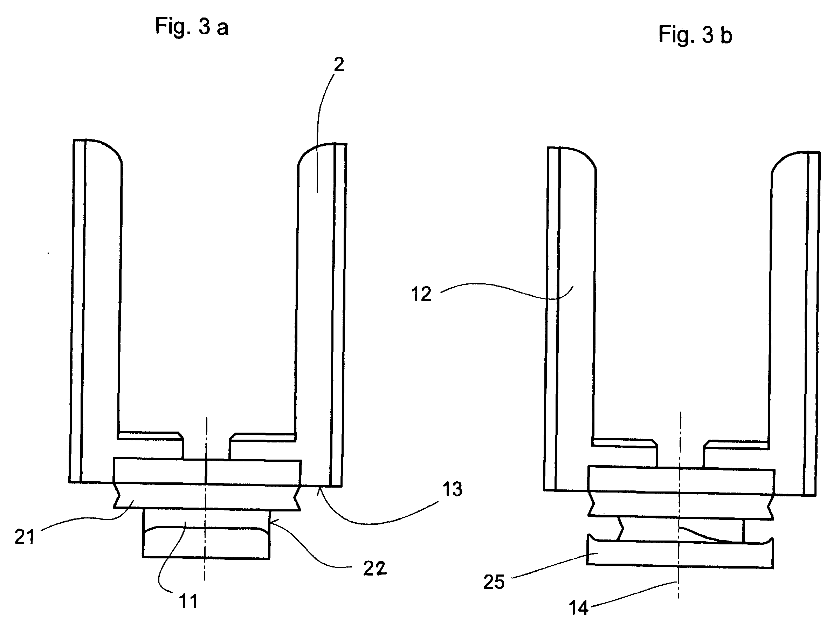

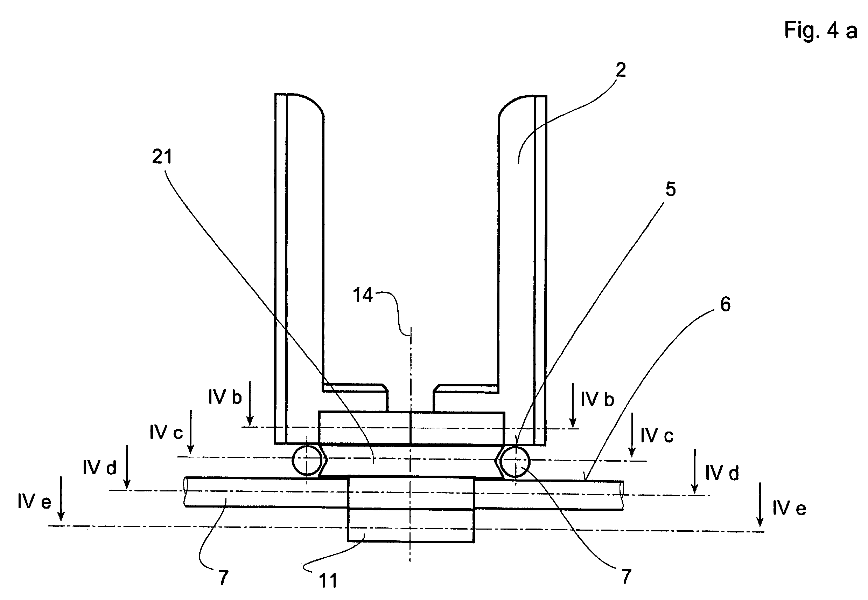

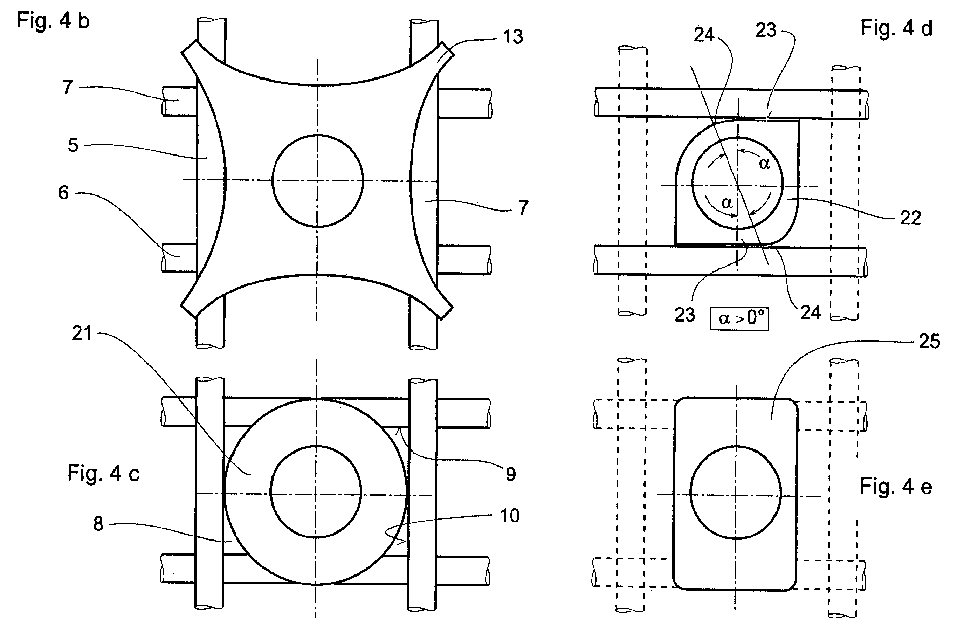

Aus Figur 2 ist die drehfeste und lageorientierte Befestigung des Verbindungskörpers 2 in einer der Aufnahmeöffnungen 8 des Traggestells 4 ersichtlich. Diese lösbare, jedoch ausschließlich mit einem vorgegebenen Drehmoment zu schaffende bzw. zu lösende Verbindung zwischen dem Verbindungskörper 2 und dem Traggestell 4 ist gemäß den Figuren 3a, 3b, 4a bis 4e dadurch erreicht, dass der Haltesockel 11 Befestigungsmittel aufweist, die in besonders geeigneter Weise mit der Aufnahmeöffnung 8 bzw. der oberen und unteren Ebene 5, 6 der Drahtstränge 7 zusammenwirken, wie dies nachfolgend im Einzelnen näher erläutert ist.

Unmittelbar an dem Verbindungskörper 2 angebracht und als Bestandteil des Haltesockels 11 ist ein Zylinder 21 vorgesehen, dessen Durchmesser etwas kleiner bemessen ist, als die Länge der Kante 9 der Aufnahmeöffnung 8 der oberen Ebene 5 der Drahtstränge 7.

Benachbart zu dem Zylinder 21 ist ein Klemmelement 22 vorgesehen, wie dies insbesondere Figur 4d entnommen werden kann, an dem zwei parallel zueinander verlaufende Anlageflächen 23 angearbeitet sind. Der Zylinder 21 ist demnach den Drahtsträngen 7 der oberen Ebene 5 und das Klemmelement 22 den Drahtsträngen 7 der unteren Ebene 6 im befestigten Zustand des Verbindungskörpers 2 zugeordnet, so dass der Zylinder 21 und das Klemmelement 22 mit den Drahtsträngen 7 der jeweiligen Ebene 5 bzw. 6 zusammenwirken.

Die beiden Anlageflächen 23 des Klemmelementes 22 liegen spiegelbildlich versetzt zueinander und weisen jeweils eine Länge auf, die größer bemessen ist, als die halbe Länge der kürzeren Kante 10 der Aufnahmeöffnung 8. Insbesondere in Figur 4d ist ersichtlich, dass die Länge der jeweiligen Anlagefläche 23 über den Mittelpunkt des Haltesockels 11 hinausragt. Dies ist schematisch mit dem Winkel α gekennzeichnet, der folglich größer als null ist. Je größer der Winkel α bzw. die Länge der Anlagefläche 23 bemessen ist, desto größer ist das aufzuwendende Drehmoment, um den Verbindungskörper 2 in der Aufnahmeöffnung 8 zu verdrehen. Die Enden der Anlageflächen 23 bilden nämlich Rastnasen 24, die folglich diametral gegenüberliegen. Beim Verdrehen des Verbindungskörpers 2 wirken die Kanten 10 der Aufnahmeöffnung 8 als Hindernis, so dass durch diese eine Vorspannkraft auf die Rastnasen 24 ausgeübt wird, wodurch diese zusammengedrückt werden, da die Diagonale zwischen den Rastnasen 24 größer bemessen ist als die kürzere Kante 10 der Aufnahmeöffnung 8. Sobald jedoch der Verbindungskörper 2 eingedreht oder ausgedreht ist, schnappen die Rastnasen 24 in ihre Ausgangsposition zurück.

Somit liegen die Anlageflächen 23 im montierten Zustand des Verbindungskörpers 2 in der Aufnahmeöffnung 8 an den Drahtsträngen 7 der unteren Ebene 6 an. Darüberhinaus erstrecken sich die Anlageflächen 23 über die halbe Länge der kürzeren Kante 10 der Aufnahmeöffnung 8, so dass durch diese eine rechtwinklige Rastnase 24 geschaffen ist.

Benachbart zu dem Klemmelement 22 ist als Bestandteil des Haltesockels 11 eine Fixierplatte 25 vorgesehen, die eine rechteckförmige Außenkontur aufweist. Die Außenkontur der Fixierplatte 25 ist dabei an die Innenkontur der Aufnahmeöffnung 8 angepasst, so dass die Fixierplatte 25 beim Einsetzen des Verbindungskörpers 2 in die Aufnahmeöffnung 8 durch diese hindurch gesteckt werden kann, ohne dass die Fixierplatte 25 den Einsteckvorgang des Verbindungskörpers 2 behindert.

Zwei der vier gegenüberliegenden Stirnseiten der Fixierplatte 25 überragen dabei die Anlageflächen 23 des Klemmelementes 22 und die zwei dazu senkrecht verlaufenden Stirnseiten der Fixierplatte 25 sind von dem Zylinder 21 überragt.

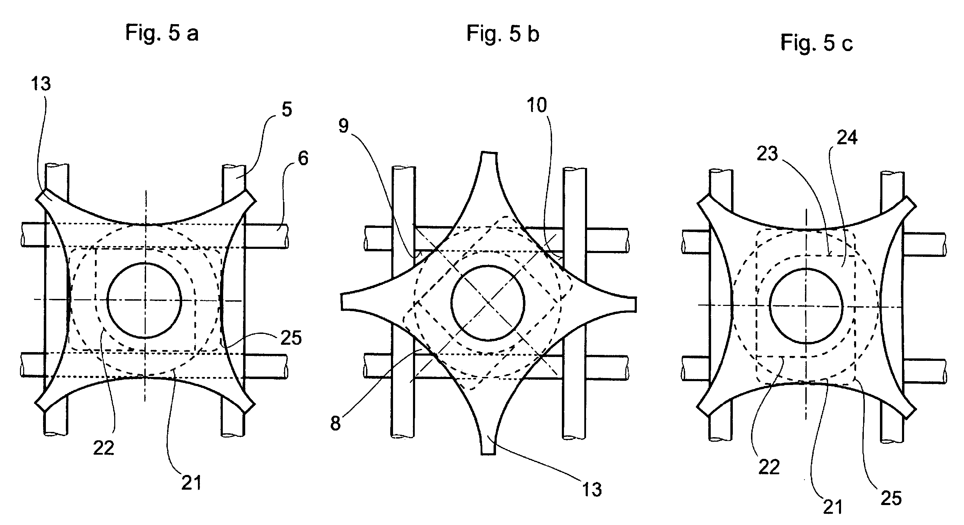

In Figur 5a ist das Einstecken des Verbindungskörpers 2 in eine der Aufnahmeöffnungen 8 des Traggestells 4 dargestellt. Die an dem Verbindungskörper 2 abstehenden Haltenasen 13 sind dabei vorteilhafterweise einem der Kreuzungspunkte der Drahtstränge 7 der oberen und unteren Ebene 5, 6 zugeordnet und liegen auf den Drahtsträngen 7 der oberen Ebene 5 auf. Die Fixierplatte 25, das Klemmelement 22 und der Zylinder 21 befinden sich vollständig eingetaucht in der Aufnahmeöffnung 8. Da der Durchmesser des Zylinders 21 der längeren Kante 9 der Aufnahmeöffnung 8 der oberen Ebene 5 der Drahtstränge 7 entspricht, dient der Zylinder 21 als Führungsmittel beim Verdrehen des Verbindungskörpers 2 in der Aufnahmeöffnung 8. Gleichzeitig verhindert der Zylinder 21 durch die permanente Anlage dessen Mantelfläche an den beiden gegenüberliegenden Drahtsträngen 7 der oberen Ebene 5, dass der Verbindungskörper 2 in der von dem Traggestell 4 gebildeten Ebene hin und her beweglich ist. Durch den Zylinder 21 ist demnach der Verbindungskörper 2 zwischen den Drahtsträngen 7 der oberen Ebene 6 ortsfest gehalten.

Aus Figur 5b ist ein Zwischenschritt beim Einsetzen und Verdrehen des Verbindungskörpers 2 in die Aufnahmeöffnung 8 ersichtlich. In diesem Zustand sind nämlich die rechtwinklig ausgestalteten Rastnasen 24 der Anlagefläche 23 des Klemmelements 22 durch die Drahtstränge 7 der unteren Ebene 6 zusammengedrückt, da die Lichteweite, also der diagonale Abstand zwischen den beiden diametral gegenüberliegenden Rastnasen 24 etwas größer bemessen ist, als die Diagonale der beiden kürzeren Kanten 10, wodurch eine Verrastung entsteht.

Sobald gemäß Figur 5c der Verbindungskörper 2 um weitere 45° in der Aufnahmeöffnung 8, also um die eigene Längsachse 14, gedreht ist, schnappen die Rastnasen 24 des Klemmelementes 22 in ihre Ausgangsposition zurück und die plan ausgestaltete Anlagefläche 23 des Klemmelementes 22 liegt an den Drahtsträngen 7 der unteren Ebene 6 an, wodurch der Verbindungskörper 2 drehfest zwischen diesen Drahtsträngen 7 der unteren Ebene 6 positioniert ist.

Um ein Herausfallen des Verbindungskörpers 2 aus der Ausnahmeöffnung 8 zu verhindern, ist die Fixierplatte 25 vorzusehen, deren beiden gegenüberliegenden Stirnseiten, die die Anlageflächen 23 überragen, die Drahtstränge 7 der unteren Ebene 6 übergreifen, so dass durch das Verdrehen des Verbindungskörpers 2 auch die Fixierplatte 25 in eine Position überführt ist, durch die eine Blockierung des Verbindungskörpers in der Aufnahmeöffnung 8 geschaffen ist, da der Verbindungskörper 2 mittels der Haltenasen 13 und der Fixierplatte 25 an den Drahtsträngen 7 der oberen und unteren Ebene 5, 6 verspannt gehalten ist.

Um die Halterung des Aufnahmekörpers 2 an den Drahtsträngen 7 der beiden Ebenen 5, 6 zu verbessern, ist in die Stirnseite des Klemmelementes 22, die jeweils den Drahtsträngen 7 der unteren Ebene 6 im verdrehfesten Zustand des Verbindungskörpers 2 zugewandt ist, eine bogen- oder V-förmige Einkerbung eingearbeitet, deren Geometrie nach Art eines Trichters ausgestaltet und an den Außenumfang der Drahtstränge 7 angepasst ist, so dass die Einkerbung die Drahtstränge 7 teilweise umgreift, wodurch eine zusätzliche Fixierungsmöglichkeit geschaffen ist. Auch in die Mantelfläche des Zylinders 21 ist eine solche V-oder bogenförmige Einkerbung eingearbeitet, durch die somit der Verbindungskörper 2 in zweifacher Hinsicht an den Drahtsträngen 7 der oberen und unteren Ebene 5, 6 befestigt ist.

Ferner sind an dem Verbindungskörper 2 in dessen Umfangsrichtung vier Haltenasen 13 angeformt, die von diesem radial abstehen und im eingesteckten Zustand des Verbindungskörpers 2 die obere Ebene 5 der Drahtstränge 7 übergreifen, so dass die Drahtstränge 7 an der Unterseite der Haltenasen 13 anliegen. Folglich ist der Verbindungskörper 2 in Richtung der unteren Ebene 6 durch die Drahtstränge 7 der oberen Ebene 5 blockiert.

Die den Drahtsträngen 7 der unteren Ebene 6 zugewandte Oberseite der Fixierplatte 25 weist ebenso eine bogenförmige Innenkontur auf, in die die Drahtstränge 7 der unteren Ebene 6 im verdrehfesten Zustand des Verbindungskörpers 2 einschnappen und in diesen anliegen.

Die Höhe des Zylinders 21 und des Klemmelementes 22 sind an die Durchmesser der Drahtstränge 7 angepasst.

Das Traggestell 4 wird oftmals verwendet und soll eine gewisse Eigenstabilität aufweisen, so dass die Drahtstränge 7 aus einem metallischen Werkstoff hergestellt sind. Das die Drahtstränge 7 fixierende Kastenprofil 16 bzw. dessen Stege 15 sind aus einem korrosionsbeständigen Metall gefertigt.

Die Verbindungskörper 2 sollen aus einem Kunststoffwerkstoff gefertigt sein, um insbesondere den Schnappmechanismus der Rastnasen 24 des Klemmelementes 22 beim Ein- bzw. Ausdrehen des Verbindungskörpers 2 aus der Aufnahmeöffnung 8 zu erreichen.

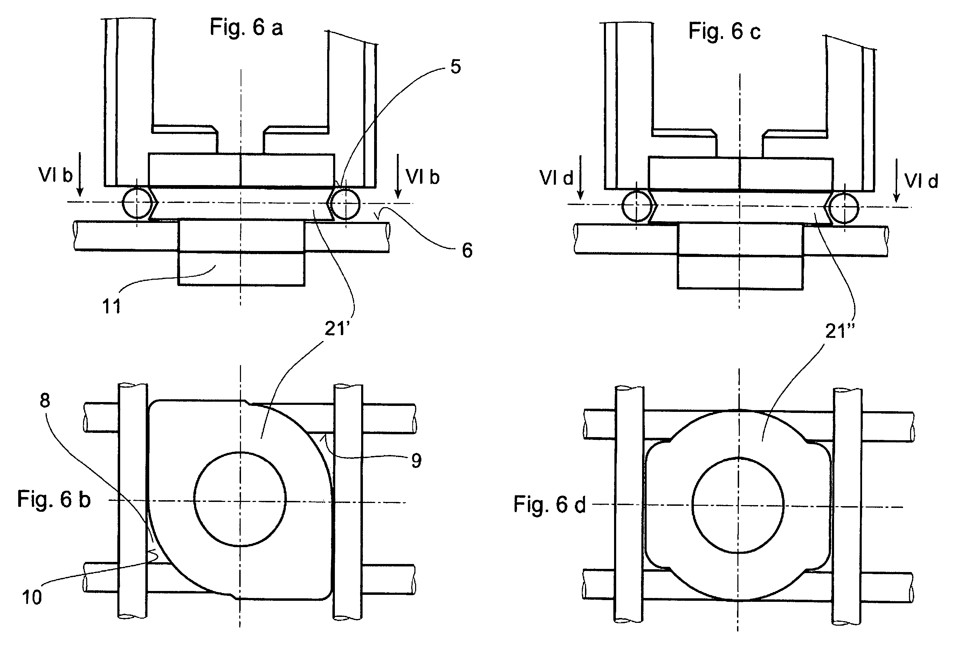

Aus den Figuren 6a bis 6d ist zu entnehmen, wie die vier verschiedenen Ebenen des Haltesockels 11 zu den Ebenen 5 und 6 der Drahtstränge 7 zugeordnet sind, wenn der Verbindungskörper 2 in die Aufnahmeöffnung 8 des Traggestells 4 eingesteckt ist.

Da die Mantelfläche des Zylinders 21 ausschließlich in der oberen Ebene 5, also im Bereich der längeren Kante 9 der Aufnahmeöffnung 8, verläuft, kann der Verbindungskörper 2 verdreht werden. Die kürzere Kante 10 der Aufnahmeöffnung 8 behindert eine solche Bewegung nicht, da diese unterhalb des Zylinders 21 verläuft.

## Patentansprüche

1. Vorrichtung (1) zur Aufnahme und Arretierung von Gegenständen (3), beispielsweise von Werkstücken oder Werkzeugen,
- mit einem nach Art einer Gitterstruktur aufgebauten Traggestell (4), das aus parallel und beabstandet zueinander ausgerichteten Drahtsträngen (7) gebildet ist, durch die mindestens eine rechteckförmige Aufnahmeöffnung (8) geschaffen ist, wobei die parallel zueinander verlaufenden Drahtstränge (7) in jeweils einer Ebene (5, 6) angeordnet sind und wobei der Abstand (a) der Drahtstränge (7) der oberen Ebene (5) die Kantenlänge der längeren Kanten (9) der Aufnahmeöffnung (8) bestimmt und der Abstand (b) der Drahtstränge (7) der unteren Ebene (6) die Kantenlänge der kürzeren Kanten (10) der Aufnahmeöffnung (8) bestimmt,
- und mit mindestens einem eine Längsachse (14) aufweisenden Verbindungskörper (2), an dessen einer Stirnseite ein fluchtend zur Längsachse (14) ausgerichteter Haltesockel (11) vorgesehen ist, der in eine der Aufnahmeöffnungen (8) des Traggestells (4) einsteckbar ist und an dessen gegenüberliegenden Stirnseite eine oder mehrere Halte- oder Aufnahmeelemente (12) angebracht sind, durch die die Gegenstände (3) mit dem Verbindungskörper (2) und dem Traggestell (4) fixiert werden können,
**dadurch gekennzeichnet,**
- **dass** der Haltesockel (11) in Richtung der Längsachse (14) aus einem Zylinder (21), einem Klemmelement (22) und einer Fixierplatte (25) aufgebaut ist,
- **dass** der Zylinder (21) umittelbar an dem Verbindungskörper (2) angebracht ist und dessen Durchmesser der Kantenlänge (a) der Längeren Kanten (9) der Aufnahmeöffnung (8) entspricht,
- **dass** benachbart zu dem Zylinder (21) das Klemmelement (22) vorgesehen ist, wobei an dessen Außenseite eine Anlagefläche oder zwei Anlagenflächen (23) angeformt ist bzw. sind , die im montierten Zustand parallel zu den Drahtsträngen (7) der unteren Ebene (6) ausgerichtet ist bzw. sind und deren Abstand zur jeweils gegenüberliegenden Kante der Aufnahmeöffnung (8) der Kantenlänge (b) der kürzeren Kante (10) der Aufnahmeöffnung (8) entspricht,
- **dass** benachbart zu dem Klemmelement (22) die Fixierplatte (25) vorgesehen ist, wobei deren Außenkontur an die Innenkontur der Aufnahmeöffnung (8) des Traggestells (4) angepasst ist,
- und **dass** die Fixierplatte (25) mit zwei gegenüberliegenden Stirnseiten über die jeweilige Anlagefläche (23) des Klemmelementes (22) übersteht und die beiden senkrecht dazu verlaufenden Stirnseiten der Fixierplatte (25) von dem Zylinder (21) überragt sind.

2. Verbindungskörper (2) zur Anwendung in einer Vorrichtung (1) nach Anspruch 1, bestehend aus einem fluchtend zu einer Längsachse (14) des Verbindungskörpers (2) ausgerichteten Haltesockel (11) und mindestens einem dem Haltesockel (11) gegenüberliegenden Halte- oder Aufnahmeelement (12) zur Aufnahme und Fixierung von Gegenständen (3),
**dadurch gekennzeichnet,**
- **dass** der Haltesockel (11) in Richtung der Längsachse (14) aus einem Zylinder (21), einem Klemmelement (22) und einer Fixierplatte (25) aufgebaut ist,
- **dass** der Zylinder (21) unmittelbar an dem Verbindungskörper (2) angebracht ist,
- **dass** benachbart zu dem Zylinder (21) das Klemmelement (22) angearbeitet ist, wobei dessen Anßenseite eine Anlagefläche (23) oder zwei parallel zueinander verlaufende Anlageflächen (23) aufweist,
- **dass** benachbart zu dem Klemmelement (22) die Fixierplatte (25) vorgesehen ist, wobei die Fixierplatte rechteckforming ist,
- und **dass** die Fixierplatte (25) mit zwei gegenüberliegende Stirnseiten über die jeweilige Anlagefläche (23) des Klemmelementes (22) übersteht und die beiden senkrecht dazu verlaufenen Stirnseiten der Fixierplatte (25) von dem Zylinder (21) überragt sind.

3. Vorrichtung (1) oder Verbindungskörper (2) nach Anspruch 1 oder 2,
**dadurch gekennzeichnet,**
**dass** die Höhe des Zylinders (21) und des Klemmelementes (22) an den Durchmesser der das Traggestell (4) bildenden Drahtstränge (7) angepasst ist.

4. Vorrichtung (1) oder Verbindungskörper (2) nach einem der vorgenannten Ansprüche,
**dadurch gekennzeichnet,**
**dass** in zwei Stirnseiten des Klemmelementes (22) eine bogen- oder V-förmige Einkerbung eingearbeitet ist und dass die Einkerbung den jeweiligen Drahtstrang (7) in montiertem Zustand teilweise umgreift.

5. Vorrichtung (1) oder Verbindungskörper (2) nach einem der vorgenannten Ansprüche,
**dadurch gekennzeichnet,**
**dass** in die Oberfläche der Fixierplatte (25) eine bogenförmige Kontur eingearbeitet ist, die im montierten Zustand des Aufnahmekörpers (2) der unteren Ebene (6) des Traggestells (4) zugewandt ist und deren Bogenmaß an den Durchmesser der Drahtstränge (7) der unteren Ebene (6) angepasst ist.

6. Vorrichtung (1) oder Verbindungskörper (2) nach einem der vorgenannten Ansprüche,
**dadurch gekennzeichnet,**
**dass** die Länge der jeweiligen Anlagefläche (23) des Klemmelements (22) größer bemessen ist als die halbe Länge der längeren Kanten (9) der Aufnahmeöffnung (8).

7. Vorrichtung (1) oder Verbindungskörper (2) nach einem der vorgenannten Ansprüche,
**dadurch gekennzeichnet,**
**dass** die jeweilige Anlagefläche (23) des Klemmelementes (22) eine Rastnase (24) aufweist welche beim Verdrehen des Verbindungskörpers (2) in dem Traggestell (4) durch die zwei parallel verlaufenden Drahtstränge (7) der unteren Ebene (6) zusammengedrückt wird.

8. Vorrichtung (1) oder Verbindungskörper (2) nach einem der vorgenannten Ansprüche,
**dadurch gekennzeichnet,**
**dass** der Verbindungskörper (2) aus einem Kunststoff-Werkstoff hergestellt ist und, die, Vorrichtung (1) betreffend, die Drahtstränge (7) aus einem metallischen Werkstoff hergestellt sind.

9. Vorrichtung (1) nach einem der vorgenannten Ansprüche,
**dadurch gekennzeichnet,**
**dass** die freien Enden der jeweiligen Drahtstränge (7) der beiden oberen und unteren Ebenen (5, 6) an einem geschlossenen Kastenprofil befestigt sind und dass das Kastenprofil aus vier miteinander verbundenen Stegen gebildet ist.

10. Vorrichtung (1) oder Verbindungskörper (2) nach einem der vorgenannten Ansprüche,
**dadurch gekennzeichnet,**
- **dass** an der Außenseite des Verbindungskörpers (2) mindestens eine radial abstehende Haltenase (13) angeformt ist, die im eingesetzten Zustand des Verbindungskörpers (2) in das Traggestell (4) jeweils einen der Drahtstränge (7) der oberen Ebene (5) des Traggestells (4) übergreift und an diesem anliegt.

## Claims

1. A device (1) for holding and locking objects (3), for example workpieces or tools,
- with a support rack (4) structured according to the type of a mesh structure created from wire strands (7) aligned parallel to and at a distance from one another, by means of which at least one rectangular holding opening (8) is created, in which the wire strands (7) running parallel to one another are arranged on one plane (5, 6) each and in which the distance (a) of the wire strands (7) in the upper plane (5) determines the edge length of the longer edges (9) of the holding opening (8) and the distance (b) of the wire strands (7) of the lower plane (6) determines the edge length of the shorter edges (10) of the holding opening (8),
- and with at least one connection body (2) featuring a lengthways axis (14), on one face end of which connection body (2) a retaining socket (11) aligned flush with the lengthways axis (14) is provided, in which case the retaining socket (11) can be inserted into one of the holding openings (8) of the support rack (4) and on the other face end of which there are attached one or more retaining or holding elements (12) by means of which the objects (3) can be fixed onto the connection body (2) and the support rack (4)
**characterized in that,**
- the retaining socket (11) in the direction of the lengthways axis (14) comprises a cylinder (21), a clamping element (22) and a fixing plate (25),
- the cylinder (21) is directly attached to the connection body (2) and its diameter corresponds to the edge length (a) of the longer edges (9) of the holding opening (8),
- the clamping element (22) is provided adjacent to the cylinder (21), in which case one contact surface or two contact surfaces (23) is/are formed onto the outside of the clamping element (22), which when installed is/are aligned in parallel to the wire strands (7) of the lower plane (6) and their distance from the opposite edge of the holding opening (8) in each case corresponds to the edge length (b) of the shorter edge (10) of the holding opening (8),
- the fixing plate (25) is provided adjacent to the clamping element (22), in which case the external contour of the fixing plate (22) is adapted to the internal contour of the holding opening (8) of the support rack (4),
- and that the fixing plate (25) projects with two opposite face ends beyond the corresponding contact surface (23) of the clamping element (22) and the cylinder (21) projects beyond the two face ends of the fixing plate (25) running at right angles to this.

2. A connection body (2) for use in a device (1) in accordance with Claim 1, consisting of a retaining socket (11) aligned flush to a lengthways axis (14) of the connection body (2) and at least one retaining or holding element (12) opposite the retaining socket (11) for holding and securing objects (3),
**characterized in that**
- the retaining socket (11) in the direction of the lengthways axis (14) comprises a cylinder (21), a clamping element (22) and a fixing plate (25),
- the cylinder (21) is directly attached to the connection body (2),
- the clamping element (22) is worked on adjacent to the cylinder (21), in which case its outside has one contact surface (23) or two contact surfaces (23) running parallel to one another,
- the fixing plate (25) is provided adjacent to the clamping element (22), in which case the fixing plate is rectangular in shape,
- and that the fixing plate (25) projects with two opposite face ends beyond the corresponding contact surface (23) of the clamping element (22) and the cylinder (21) projects beyond the two face ends of the fixing plate (25) running at right angles to this.

3. The device (1) or connection body (2) in accordance with Claim 1 or 2,
**characterized in that**
the height of the cylinder (21) and the clamping element (22) is adapted to the diameter of the wire strands (7) forming the support rack (4).

4. The device (1) or connection body (2) in accordance with one or more of the aforementioned claims,
**characterized in that**
an arched or V-shaped notch is worked into to end faces of the clamping element (22), and that the notch partially encloses the corresponding wire strands (7) when installed.

5. The device (1) or holding body (2) in accordance with one or more of the aforementioned claims,
**characterized in that**
the surface of the fixing plate (25) has an arch-shaped contour worked into it which, when the holding body (2) is installed faces the lower plane (6) of the support rack (4), and the its dimension of arch is adapted to the diameter of the wire strands (7) of the lower plane (6).

6. The device (1) or connection body (2) in accordance with one or more of the aforementioned claims,
**characterized in that**
the length of the corresponding contact surface (23) of the clamping element (22) is greater in size than half the length of the longer edges (9) of the holding opening (8).

7. The device (1) or connection body (2) in accordance with one or more of the aforementioned claims,
**characterised in that,**
the particular contact surface (23) of the clamping element (22) has a projection lug (24) which is compressed when the connection body (2) is rotated in the support rack (4) by means of the two wire strands (7) of the lower plane (6) running parallel to one another.

8. The device (1) or connection body (2) in accordance with one or more of the aforementioned claims,
**characterised in that,**
the connection body (2) is manufactured from a plastic material and the device (1) is manufactured from a metallic material with regard to the wire strands (7).

9. The device (1) in accordance with one of the aforementioned claims,
**characterised in that,**
the free ends of the particular wire strands (7) of the two upper and lower planes (5, 6) are attached to a closed box section, and that the box section is formed from four web that are connected together.

10. The device (1) or connection body (2) in accordance with one or more of the aforementioned claims,
**characterised in that,**
- at least one radially projecting retaining lug (13) is formed onto the outside of the connection body (2) and when the connection body (2) is inserted into the support rack (4), this retaining logo (13) projects beyond one of the wire strands (7) of the upper plane (5) of the support rack (4) and makes contact with it.

## Revendications

1. Dispositif (1) de support et de fixation d'objets (3) tels que des pièces à usiner ou des outils,
- avec un cadre-porteur (4) sous la forme d'un treillis réalisé par des faisceaux de fils (7) parallèles et espacés entre eux, par lesquels il est formé au moins une ouverture de support rectangulaire (8), les faisceaux de fils parallèles (7) étant arrangés respectivement dans un plan (5, 6), l'écartement (a) entre les faisceaux de fils (7) du plan supérieur (5) définissant la longueur des bords les plus longs (9) de l'ouverture de support (8) et l'écartement (b) entre les faisceaux de fils (7) du plan inférieur (6) la longueur des bords les plus courts (10) de l'ouverture de support (8),
- et avec au moins un corps de liaison (2) disposant d'un axe longitudinal (14), sur une face frontale duquel il est prévu un socle de retient (11) en alignement précis avec l'axe longitudinal (14) qui se laisse insérer dans une des ouvertures de support (8) du cadre-porteur (4), et sur la face opposée duquel il est prévu un ou plusieurs éléments de retient ou de support (12) qui permettent de fixer les objets (3) avec le corps de liaison (2) et le cadre-porteur (4),
**caractérisé en ce que**
- le socle de retient (11) est composé en direction de l'axe longitudinal (14) par un cylindre (21), un élément de serrage (22) et une plaque de fixation (25),
- le cylindre (21) est monté directement sur le corps de liaison (2) et que son diamètre correspond à la longueur (a) des bords les plus longs (9) de l'ouverture de support (8),
- avoisinant le cylindre (21), il est prévu l'élément de serrage (22) sur la face extérieure duquel il est prévu une ou deux surfaces de portée (23) qui, en état monté, est parallèle ou sont parallèles aux faisceaux de fils (7) du plan inférieur (6), et dont l'écartement du bord opposé respectif de l'ouverture de support (8) correspond à la longueur (b) du bord le plus court (10) de l'ouverture de support (8),
- avoisinant l'élément de serrage (22), il est prévu la plaque de fixation (25) dont le contour extérieur est adapté au contour intérieur de l'ouverture de support (8) du cadre-porteur (4), et que
- deux faces frontales opposées de la plaque de fixation (25) saillent au-delà de la surface de portée respective (23) de l'élément de serrage (22) et que les deux faces frontales perpendiculaires de la plaque de fixation (25) sont dépassées par le cylindre (21).

2. Corps de liaison (2) pour l'utilisation dans un dispositif (1) selon la revendication 1, comprenant un socle de retient (11) en alignement précis avec l'axe longitudinal (14) du corps de liaison (2) et au moins un élément de retient ou de support (12) opposé au socle de retient (11) et servant à la support et à la fixation d'objets (3),
**caractérisé en ce que**
- en direction de l'axe longitudinal (14), le socle de retient (11) est composé par un cylindre (21), un élément de serrage (22) et une plaque de fixation (25),
- le cylindre (21) est monté directement sur le corps de liaison (2),
- avoisinant le cylindre (21), il est prévu l'élément de serrage (22) sur la face extérieure duquel il est prévu une surface de portée (23) ou deux surfaces de portée (23) parallèles l'une à l'autre,
- avoisinant l'élément de serrage (22), il est prévu la plaque de fixation (25), celle-ci ayant une forme rectangulaire, et que
- deux faces frontales opposées de la plaque de fixation (25) saillent audelà de la surface de portée respective (23) de l'élément de serrage (22) et que les deux faces frontales perpendiculaires de la plaque de fixation (25) sont dépassées par le cylindre (21).

3. Dispositif (1) ou corps de liaison (2) d'après les revendications 1 ou 2,
**caractérisé en ce que**
les hauteurs du cylindre (21) et de l'élément de serrage (22) sont adaptées au diamètre des faisceaux de fils (7) formant le cadre-porteur (4).

4. Dispositif (1) ou corps de liaison (2) d'après une des revendications précédentes,
**caractérisé en ce que**
dans deux faces frontales de l'élément de serrage (22), il est pratiqué une entaille sous la forme d'un arc ou d'un V et que, en état monté, l'entaille enveloppe partiellement le faisceau de fils respectif (7).

5. Dispositif (1) ou corps de liaison (2) d'après une des revendications précédentes,
**caractérisé en ce que**
dans la surface de la plaque de fixation (25), il est pratiqué un contour en arc qui, le corps de support (2) une fois monté, donne sur le plan inférieur (6) du cadre-porteur (4) et dont le radian est adapté au diamètre des faisceaux de fils (7) du plan inférieur (6).

6. Dispositif (1) ou corps de liaison (2) d'après une des revendications précédentes,
**caractérisé en ce que**
la longueur de la surface de portée respective (23) de l'élément de serrage (22) est plus grande que la mi-longueur des bords les plus longs (9) de l'ouverture de support (8).

7. Dispositif (1) ou corps de liaison (2) d'après une des revendications précédentes,
**caractérisé en ce que**
la surface de portée respective (23) de l'élément de serrage (22) comporte un nez de crantage (24) qui, en tournant le corps de liaison (2) dans le cadre-support (4), est comprimé par les deux faisceaux de fils parallèles (7) du plan inférieur (6).

8. Dispositif (1) ou corps de liaison (2) d'après une des revendications précédentes,
**caractérisé en ce que**
le corps de liaison (2) est réalisé en matériau synthétique et que le dispositif (1) est réalisé en matériau métallique pour ce qui est les faisceaux de fils (7).

9. Dispositif (1) d'après une des revendications précédentes,
**caractérisé en ce que**
les extrémités libres des faisceaux de fils respectifs (7) des deux plans supérieurs et inférieurs (5, 6) sont fixées sur un profil en caisse fermé et que le profil en caisse est formé par quatre traverses liées ensemble.

10. Dispositif (1) ou corps de liaison (2) d'après une des revendications précédentes,
**caractérisé en ce que**
sur la face extérieure du corps de liaison (2), il est formé au moins un nez de retient (13) saillant radialement, qui, le corps de liaison (2) étant inséré dans le cadre-porteur (4), passe au-dessus de respectivement un des faisceaux de fils (7) du plan supérieur (5) du cadre-support (4), et porte sur celui-ci.
